# EUROPÄISCHE PATENTSCHRIFT

(11) **EP 1 728 019 B1**
(45) Veröffentlichungstag und Bekanntmachung des Hinweises auf die Patenterteilung: **27.05.2009**
(21) Anmeldenummer: 05717129.0
(22) Anmeldetag: 23.03.2005
(51) Int. Cl.: F16L 19/05

(54) **VERSCHRAUBUNGSVORRICHTUNG FÜR ROHRLEITUNGEN**
PIPE-CONNECTING DEVICE
DISPOSITIF DE RACCORDEMENT POUR CONDUITES

(30) Priorität: 26.03.2004 DE 202004004940 U
(43) Veröffentlichungstag der Anmeldung: 06.12.2006
(73) Patentinhaber: VOSS Fluid GmbH, 51688 Wipperfürth (DE)
(72) Erfinder: BERGHAUS, Gerd, 51515 Kürten (DE); POTT, Harald, 42499 Hückeswagen (DE)
(74) Vertreter: Zapf, Christoph
(86) Internationale Anmeldenummer: PCT/EP2005/051332
(87) Internationale Veröffentlichungsnummer: WO 2005/093310

(56) Entgegenhaltungen:
- DE-A1- 1 959 098
- US-A- 3 537 731
- US-B1- 6 598 908

## Beschreibung

Die vorliegende Erfindung betrifft eine Verschraubungsvorrichtung für Rohrleitungen, bestehend aus einer Rohrleitung und aus einem Gewindeanschlußstück und einer auf dieses aufschraubbaren Überwurfmutter und einem zwischen dieser und einem Anschlußende der Rohrleitung angeordneten Haltering mit einer Durchgangsbohrung für die Rohrleitung, wobei das Anschlußende der Rohrleitung einen Flanschkragen und der Haltering eine Anlagefläche für die Überwurfmutter aufweisen sowie der Haltering eine dem Flanschkragen zugekehrte Endfläche zur Anlage an dem Flanschkragen besitzt.

Aus der DE 19 59 098 A1 ist eine gattungsgemäße Verschraubungsvorrichtung bekannt. Diese Verschraubungsvorrichtung ist insoweit nachteilig, dass nicht zwischen einer Vor- und Endmontagestellung beim Aufschrauben der Überwurfmutter unterschieden werden kann und der Haltering beim Anziehen der Überwurfmutter auf der Rohrleitung nicht fixiert ist.

Aus der DE 690 00 739 T2 ist ein Verfahren zum Herstellen einer Verschraubungsvorrichtung bekannt. Hierbei besteht der Haltering aus einem Material, dessen Elastizität wenigstens gleich demjenigen des die Rohrleitung bildenden Materials ist. Zur Herstellung dieser Verschraubungsvorrichtung wird zunächst auf das anzuschließende Rohrleitungsende die Überwurfmutte und der Haltering aufgeschoben und danach der Haltering zusammen mit dem Rohrleitungsende in einem Verformungswerkzeug eingespannt. In diesem Verkormungswerkzeug werden dann durch Rollumformung, d. h. mit Hilfe eines als Wälzumformteil ausgebildeten Werkzeuges das Rohrende um 90° gebördelt, so dass ein Flanschkragen entsteht und gleichzeitig bei diesem Bördelvorgang der mit äußerem Spiel in einer Matrize des Werkzeuges liegende Haltering aufgeweitet wird. Beim Entformen der Rohrleitung mit dem Haltering aus dem Werkzeug ist der Haltering bestrebt, aufgrund seiner Elastizität, seine ursprüngliche Abmessung wieder einzunehmen und übt auf die Rohrleitung einen radial nach innen gerichteten Druck aus, wodurch er kraftschlüssig auf dem Rohr sitzt, und zwar unter gleichzeitiger Anlage an dem Flanschkragen. Der Nachteil dieser Verschraubungsvorrichtung und des Herstellungsverfahrens liegt darin, dass der Haltering beim Einlegen in das Werkzeug exakt in den jeweiligen Spannbackenhälften des Werkzeuges fixiert werden muß. Dieses erfordert ein gewissen Geschick des Bedieners und ist sicherheitstechnisch kritisch, da der jeweilige Bediener in den Spannbereich hineingreifen muß. Zudem ist eine genaue Anpassung der Materialien von Haltering und Rohrleitung erforderlich, um die gewünschte kraftschlüssige Verbindung mit Sicherheit zwischen diesen beiden Teilen zu gewährleisten.

Der vorliegenden Erfindung liegt die Aufgabe zugrunde, die vorstehende Nachteile zu vermeiden und eine Vereinfachung des Herstellvorganges zu erreichen, wobei jedoch eine feste Rohreinspannung, d.h. eine kraftschlüssige Verbindung, zwischen dem Rohr und dem Haltering erzielt wird.

Erfindungsgemäß wird dies dadurch erreicht, dass an einem dem Flanschkragen zugekehrten Endbereich der Durchgangsbohrung des Halterings ein sich vom Innendurchmesser der Durchgangsbohrung über eine bestimmte Länge bis zum Ende der Durchgangsbohrung und endend an der dem Flanschkragen zugekehrten Endfläche des Halterings im Durchmesser vergrößernder Innenkonus Abschnitt ausgebildet ist und am Umfang der Rohrleitung ein sich über eine bestimmte Länge bis zum Flanschkragen erstreckender und sich im Durchmesser vergrößernder Außenkonus-Abschnitt ausgebildet ist, dessen Abmessungen und Konuswinkel an die Abmessungen und den Konuswinkel des Innenkonus-Abschnittes angepaßt sind. Erfindungsgemäß wird demnach am anzuschließenden Rohrleitungsende einerseits der um 90° zur Rohrleitungslängsachse abgewinkelte Flanschkragen vorzugsweise in einem Bördelvorgang angeformt und gleichzeitig der Außenkonus Abschnitt erzeugt. Damit erfolgt die Umbördelung und die Ausbildung des Konusabschnittes unabhängig von dem Haltering, so dass eine Fixierung des Halterings in einem speziellen Werkzeug entfallen kann, um eine kraftschlüssige Verbindung zwischen dem Rohrleitungsende und dem Haltering zu erzeugen. Vielmehr wird die kraftschlüssige Verbindung dadurch erzeugt, dass die Überwurfmutter auf das Gewindeanschlußstück aufgeschraubt wird, wobei die Überwurfmutte zweckmäßigerweise zwei Montagestellungen einnimmt, und zwar zunäcast eine Vormontagestellung, wobei die Überwurfmutter von Hand auf das Gewindeanschlußstück aufgeschraubt wird, und wobei der Haltering mit seinem in Inneren vorgeformten Innenkonus-Abschnitt auf das Rohrleitungsende, und zwar auf dessen Außenkonus-Abschnitt, aufgeschoben wird. Bei dieser Handvormontage nimmt der Haltering dann eine Vormontagestellung ein, wobei ein Spalt-Abstand x vom Flanschkragen vorhanden ist, der 0,1mm-1mm, vorzugsweise 0.3nm-0.6mm beträgt. Dieser Spalt-Abstand x entspricht ca. ¼ Umdrehung der Überwurfmutter, die eine Gewindesteigung im Bereich von 1,4mm-2,2mm besitzt. Die Abmessungen der beiden Konusabschnitte und ihr Konuswinkel sind derart gewählt, dass der gewünschte Spalt-Abstand x jeweils erreicht wird. Zur Endmontage mittels eines Werkzeuges wird die Überwurfmutter dann soweit angezogen, bis der Haltering mit seinem dem Flanschkragen zugekehrten Ende an diesem anliegt. Beim Erreichen der Endmontagestellung wird je nach Werkstoff von Haltering und Rohrleitung und in Abhängigkeit von der Wandstärke der Rohrleitung und der Wandstärke des Halteringes das Rohr im Konusbereich nach Innen verformt, insbesondere bei einem dünnwandigen Rohr. bzw. der Haltering im Konusbereich aufgeweitet. Durch diese Verformung des Halterings und/oder der Rohrleitung wird eine kraftschlüssige Verbindung zwischen der Rohrleitung und dem Haltering erzeugt, und zwar unmittelbar hinter dem Flanschkragen, so dass eine sehr gute dynamische Belastbarkeit der Verbindung erzielt wird.

Weitere vorteilhafte Ausführungen sind den Unteransprüchen enthalten.

Anhand des in den beiliegenden Zeichnungen dargestellten Ausführungsbeispiels wird die Erfindung näher erläutert.

Es zeigen:
- Fig. 1: einen Teilquerschnitt durch eine erfindungsgemäße Verschraubungs- vorrichtung in einer Vomontagestellung und
- Fig. 2: einen Teilquerschnitt durch die Verschraubungsvorrichtung gemäß Fig. 1 in der Endmontagestellung

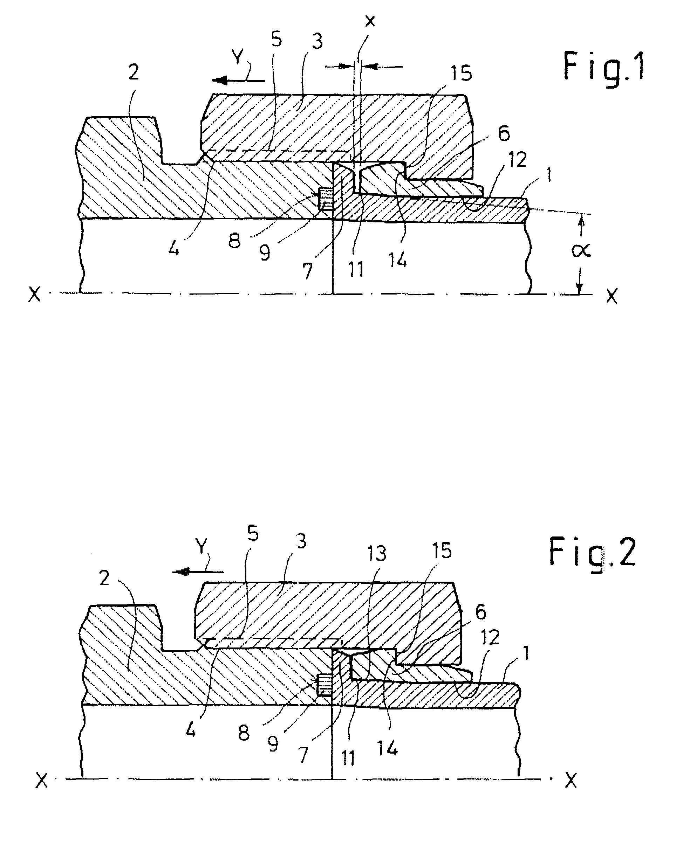

Wie sich aus Fig. 1 ergibt, besieht eine erfindungsgemäße Verschraubungsvorrichtung für eine Rohrleitung 1 aus einem Gewindeanschlußstück 2 und einer auf dieses aufschraubbaren Überwurfmutter 3. Das Gewindeanschlußstück 2 besitzt ein Außengewinde an einem Gewindeabschnitt 4 und die Überwurfmutter 3 weist ein entsprechendes Innengewinde an einem Gewindeabschnitt 5 auf. Zwischen der Überwurfmutter 3 und der Rohrleitung 1 an ihrem anzuschließenden Rohrleitungsende ist ein Haltering 6 angeordnet. Das anzuschließende Ende der Rohrleitung 1 weist einen endseitigen Flanschkragen 7 auf. Mit diesem Flanschkragen 7 liegt das Rohrleitungsende in der gezeigten Vormontagestellung der Fig. 1 an dem der Rohrleitung 1 zugekehrten Ende, d. h. an der ringförmigen Endfläche des Gewindeanschlußstückes 2 an. In der ringförmigen Endfläche des Gewindeanschlußstückes 2 ist eine Ringnut 8 ausgebildet, in der ein Dichtring 9 eingelegt ist. Unmittelbar hinter dem Flanschkragen 7 weist die Rohrleitung 1 einen Außenkonus-Abschnitt 11 auf. Dieser Außenkonus-Abschnitt 11 erstreckt sich über eine bestimmte Länge des Rohrleitungsendes und der Durchmesser des Außenkonus-Abschnittes 11 vergrößert sich ausgehend vom Außendurchmesser der Rohrleitung 1 bis zum Flanschkragen 7. Der von dem Außenkonus-Abschnitt 11 gebildete Konuswinkel a zur Längsachse der Rohrleitung ist kleiner 10° vorzugsweise 3 bis 7°, so dass er im Bereich der Selbsthemmung liegt. Der Haltering 6 weist an seinem dem Flanschkragen 6 zugekehrten Endbereich seiner Durchgangsbohrung 12 einen sich vom Innendurchmesser der Durchgangsbohrung über eine bestimmte Länge bis zum Ende der Durchgangsbohrung im Durchmesser vergrößernden Innenkonus-Abschnitt 13 auf. Der Innenkonus-Abschnitt 13 schließt mit der Längsachse der Rohrleitung 1 ebenfalls den selben Konuswinkel a kleiner 10° ein. Die Abrressungen und der Konuswinkel des Außenkonus-Abschnittes 11 und den Innenkonus-Abschnittes 13 sind demnach aufeinander abgestimmt bzw. angepaßt. Der Haltering 6 besitzt eine Anlagefläche 14 an seinem äußeren Umfang, die mit einer gegenüberliegenden Kontaktfläche 15 der Überwurfmutter 3 beim Aufschrauben der Überwurfmutter 3 derart zusammenwirkt, dass beim Aufschrauben der Überwurfmutter 3 in Aufschraubrichtung Y auf das Gewindeanschlußstück 2 durch den Anlagekontakt zwischen der Anlagefläche 14 und der Kontaktfläche 15 der Haltering 6 in Aufschraubrichtung Y verschoben wird. Der Innenkonus-Abschnitt 13 und der Außenkonus-Abschnitt 11 sind derart aufeinander angepaßt, dass der Haltering 6 auf dem Außenkonus-Abschnitt 11 bei einer Handmontage der Überwurfmutter 3 aufgeschoben wird, d.h. die Überwurfmutter 3 wird von Hand auf das Gewindeanschlußstück 2 aufgeschraubt, nachdem der Haltering 6 zuvor auf die Rohrleitung aufgeschoben worden ist, und zwar auf die bereits mit dem Flanschkragen 7 und dem Außenkonus-Abschnitt 11 versehende Rohrleitung 1. Die Handmontage erfolgt aufgrund der Anpassung des Außenkonus-Abschnittes 11 und des Innenkonus-Abschnittes 13 soweit, bis der Haltering 6 eine Vormonlagestellung eingenommen hat, die sich dadurch auszeichnet, dass der Haltering 6 mit seiner dem Flanschkragen 7 zugekehrten Endfläche einen Spalt-Abstand x eingenommen hat. Dieser Spalt-Abstand x beträgt 0,1mm-1mm, vorzugsweise 0,3 nm-0.6mm (entsprechend ¼ Umdrehung der Überwurfmutter). Ein weiterer Anzug per Hand nach Erreichen dieser Vormontagestellung entfällt, da die zum weiteren Aufschrauben der Überwurfmutter 3 erforderliche Anzugskraft von Hand nicht mehr oder nur noch schwer aufgebracht werden kann.

In Fig. 2 ist die Endmontagestellung der erfindungsgemäßen Verschraubungsvorrichtung dargestellt. Hierbei sind gleiche Teile wie in Fig. 1 mit denselben Bezugsziffern versehen. In dieser Endmontagestellung ist durch weiteres Aufschrauben der Überwurfmutter 3 auf das Gewindeanschlußstück 2 vorzugsweise mit Hilfe eines Werkzeuges, mit dem zweckmäßigerweise das Anzugsmoment einstellbar ist, die Überwurfmutter 3 soweit angezogen, bis der Haltering 6 mit seiner dem Flanschkragen 7 zugekehrten Fläche an dem Flanschkragen 7 anliegt. Das Erreichen dieser Anlagestellung drückt sich durch eine deutliche Erhöhung des Anzugsmomentes aus. Durch die erfindungsgemäße Anpassung des Innenkonus-Abschnittes 13 und des Außenkonus-Abschnittes 11 aneinander wird in dieser Endmontagestellung eine kraftschlüssige Verbindung zwischen dem Haltering 6 und der Rohrleitung 1 erreicht. Der Haltering 6 und die Rohrleitung 1 bestehen vorzugsweise aus metallischen Werkstoffen mit etwa gleichem Elastizitätsmodul. Hierbei besteht der Haltering 6 vorzugsweise aus einem Automatenstahl, wobei es sich um einen Stahl unlegierter Qualität mit höherem Phospor- und Schwefelgehalt handelt. Ein derartiger Automatenstahl ist aufgrund seines positiven Spanbruchverhaltens besonders für die Zerspanung auf Drehautomaten geeignet und er besitzt eine höhere Streckgrenze als allgemeiner Baustahl und er kann einsatzgehärtet werden. Die Rohrleitung besteht vorzugsweise aus einem gezogenen Präzisionsstahlrohr aus einem unlegierten Qualitätsstahl nach EN10305 bzw. DIN1630 oder aus einem legierten Edelstahl nach DIN17458. Derartige Rohrleitungen eignen sich besonders nach einer Kaltumformung noch für Hydraulik- oder Pneumatikdruckleitungen. Die Rohrleitung hat beispielsweise Abmessungen von 20mm Außendurchmesser und 2,5 mm Wanddicke und die Überwurfmutter weist ein Innengewinde mit einer Gewindesteigung von 2,117mm bzw. 1/12" auf. Bei einer derartig dimensionierten Verschraubungsvorrichtung beträgt der Spalt-Abstand x in der Vormontagestellung ca. 0,53mm.

In der Endmontagestellung sind die beiden Konus-Abschnitte, d. h. der Außenkonus-Abschnitt 11 und der Innenkonus-Abschnitt 13 derart verformt, dass eine kraftschlüssige Verbindung in diesem Bereich zwischen dem Haltering 6 und der Rohrleitung 1 vorhanden ist. Hierbei kann beispielsweise die Rohrleitung im Konusbereich nach Innen verformt sein, insbesondere bei einem relativ dünnwandigen Rohr, oder aber der Haltering 6 ist im Konusbereich nach Außen verformt. Jedenfalls wird hierdurch nicht die Drehbarkeit der Überwurfmutter 3 beeinträchtigt. Erfindungsgemäß lassen sich die Verformungen im Bereich der Konus-Abschnitte 11, 13 und eine feste Rohreinspannung unter Ausnutzung der Konuswirkung aufgrund der gewählten Winkelverhältnisse des Konuswinkels a mit sehr geringer Montagekraft realisieren.

## Patentansprüche

1. Verschraubungsvorrichtung für Rohrleitungen, bestehend aus einer Rohrleitung (1) und aus einem Gewindeanschlußstück (2) und einer auf dieses aufschraubbaren Überwurfmutter (3) und einem zwischen dieser und einem Anschlußende der Rohrleitung (1) angeordneten Haltering (6) mit einer Durchgangsbohrung (12) für die Rohrleitung (1), wobei das Anschlußende der Rohrleitung (1) einen Flanschkragen (7) und der Haltering (6) eine Anlagefläche (14) für die Überwurfmutter (3) aufweisen sowie der Haltering (6) eine dern Flanschkragen (7) zugekehrte Endfläche zur Anlage an dem Flanschkragen besitzt,
**dadurch gekennzeichnet, dass** an einem dem Flanschkragen (7) zugekehrten Endbereich der Durchgangsbohrung (12) des Halterings (6) ein sich vom Innendurchmesser der Durchgangsbohrung (12) über eine bestimmte Länge bis zum Ende der Durchgangsbohrung und endend an der dem Flanschsragen (7) zugekehrten Endfläche des Halterings (6) im Durchmesser vergrößernder Innenkonus-Abschnitt (13) ausgebildet ist und am Umfang der Rohrleitung ein sich über eine bestimmte Länge bis zum Flanschkragen (7) erstreckender und sich im Durchmesser vergrößernder Außenkonus-Abschnitt (11) ausgebildet ist, dessen Abmessungen und Konuswinkel an die Abmessungen und den Konuswinkel des Innenkonus-Abschnittes (13) angepaßt sind.

2. Verschraubungsvorrichtung für Rohrleitungen nach Anspruch 1,
**dadurch gekennzeichnet, dass** der Innenkonus-Abschnitt (13) und der Außenkonus-Abschnitt (11) derart aufeinander angepaßt sind,
dass der Haltering (6) auf dem Außenkonus-Abschnitt (11) bei Handmontage der Überwurfmutter (3) bis zu einem Spalt-Abstand (x) vor dem Flanschkragen (7) verschiebbar ist, wobei der Spalt-Abstand (x) 0,1mm-1,0mm, vorzugsweise 0,3mm-0,6mm beträgt.

3. Verschraubungsvorrichtung für Rohrleitungen nach Anspruch 1 oder 2, **dadurch gekennzeichnet, dass** der Konuswinkel des Innenkonus-Abschnittes (13) und des Außenkonus-Abschnittes (11) zur Rohrlängsachse (X-X) kleiner 10°, vorzugsweise 3° bis 7° beträgt.

4. Verschraubungsvorrichtung für Rohrleitungen nach einem der Ansprüche 1 bis 3,
**dadurch gekennzeichnet, dass** das Gewindeanschlußstück (2) in seiner dem Flanschkragen (7) zugewandten ringförmigen Endfläche eine Ringnut (8) zur Aufnahme eines Dichtringes (9) aufweist.

5. Verschraubungsvorrichtung für Rohrleitungen nach einem der Ansprüche 1 bis 4,
**dadurch gekennzeichnet, dass** der Haltering (6) und die Rohrleitung (1) aus metallischen Werkstoffen mit gleichem Elastizitätsmodul bestehen.

6. Verschraubungsvorrichtung für Rohrleitungen nach einem der Ansprüche 1 bis 5,
**dadurch gekennzeichnet, dass** der Haltering (6) aus einem Automatenstahl besteht.

7. Verschraubungsvorrichtung für Rohrleitungen nach einem der Ansprüche 1 bis 6,
**dadurch gekennzeichnet, dass** die Rohrleitung (1) aus einem Präzisionsstahlrohr, insbesondere aus einem unlegierten Qualtitätsstahl nach EN10305 bzw. DIN1630 besteht oder aus einem Präzisionsstahlrohr aus einem legierten Edelstahl nach DIN17458.

8. Verschraubungsvorrichtung für Rohrleitungen nach einem der Ansprüche 1 bis 7,
**dadurch gekennzeichnet, dass** der Innenkonusabschnitt (13) und der Außenkonusabschnitt (11) derart in ihren Abmessungen und ihrem Konuswinkel angepaßt sind, dass in der Endmontagestellung des Halteringes (6), in der dieser mit seinem dem Flanschkragen (7) zugekehrten Ende an diesem anliegt, eine kraftschlüssige Verbindung zwischen dem Haltering (6) und der Rohrleitung (1) besteht.

## Claims

1. A screw connecting device for pipes, consisting of a pipe (1) and of a threaded connecting piece (2) and a union nut (3) able to be screwed onto the latter and a retaining ring (6) which is arranged between the union nut (3) and a connection end of the pipe (1) and which has a through bore (12) for the pipe (1), wherein the connection end of the pipe (1) has a flange collar (7) and the retaining ring (6) has a bearing surface (14) for the union nut (3) and the retaining ring (6) has an end face, facing the flange collar (7), to rest against the flange collar, **characterised in that** at an end region, facing the flange collar (7), of the through bore (12) of the retaining ring (6) there is an inside-cone portion (13) which increases in diameter from the inside diameter of the through bore (12) over a certain length as far as the end of the through bore and ends at the end face, facing the flange collar (7), of the retaining ring (6), and at the circumference of the pipe there is an outside-cone portion (11) which extends over a certain length as far as the flange collar (7) and increases in diameter and whose dimensions and cone angle are matched to the dimensions and cone angle of the inside-cone portion (13).

2. A screw connecting device for pipes according to claim 1, **characterised in that** the inside-cone portion (13) and the outside-cone portion (11) are matched to one another in such a manner that upon manual fitting of the union nut (3), the retaining ring (6) is displaceable on the outside-cone portion (11) as far as a gap distance (x) in front of the flange collar (7), the gap distance (x) being 0.1 mm-1.0 mm, preferably 0.3 mm-0.6 mm.

3. A screw connecting device for pipes according to claim 1 or 2, **characterised in that** the cone angle of the inside-cone portion (13) and the outside-cone portion (11) with respect to the pipe longitudinal axis (X-X) is smaller than 10°, preferably 3° to 7°.

4. A screw connecting device for pipes according to any one of claims 1 to 3, **characterised in that** in its annular end face facing the flange collar (7), the threaded connecting piece (2) has an annular groove (8) to receive a sealing ring (9).

5. A screw connecting device for pipes according to any one of claims 1 to 4, **characterised in that** the retaining ring (6) and the pipe (1) are composed of metal materials with the same modulus of elasticity.

6. A screw connecting device for pipes according to any one of claims 1 to 5, **characterised in that** the retaining ring (6) is composed of a free cutting steel.

7. A screw connecting device for pipes according to any one of claims 1 to 6, **characterised in that** the pipe (1) is composed of a precision steel tube, in particular of an unalloyed high-grade steel according to EN10305 or DIN1630 or of a precision steel tube of an alloyed high-quality steel according to DIN17458.

8. A screw connecting device for pipes according to any one of claims 1 to 7, **characterised in that** the inside-cone portion (13) and the outside-cone portion (11) are matched in their dimensions and their cone angle in such a manner that in the final assembly position of the retaining ring (6), in which the end of the retaining ring (6) facing the flange collar (7) rests against the flange collar (7), there is a non-positive connection between the retaining ring (6) and the pipe (1).

## Revendications

1. Dispositif de vissage pour conduites, composé d'une conduite (1), d'un manchon fileté (2) d'un écrou-raccord (3) pouvant se visser sur celui-ci et d'une bague de retenue (6) disposée entre celui-ci et une extrémité de raccordement de la conduite (1), ladite bague présentant un alésage traversant (12) pour la conduite (1), dispositif dans lequel l'extrémité de raccordement de la conduite (1) présente une collerette (7), la bague de retenue (6) présente une surface d'appui (14) pour l'écrou-raccord (3), et la bague de retenue (6) possède une surface d'extrémité tournée vers la collerette (7) pour une application contre la collerette,
**caractérisé en ce qu'**un segment conique intérieur (13) est réalisé dans une zone d'extrémité, tournée vers la collerette (7), de l'alésage traversant (12) de la bague de retenue (6), ce segment conique intérieur (13) présentant un diamètre qui augmente à partir du diamètre intérieur de l'alésage traversant (12) sur une certaine longueur jusqu'à l'extrémité de l'alésage traversant et qui se termine au niveau de la surface d'extrémité, tournée vers la collerette (7), de la bague de retenue (6), et **en ce qu'**au niveau de la circonférence de la conduite est réalisé un segment conique extérieur (11), ce segment conique s'étendant sur une certaine longueur jusqu'à la collerette (7) et présentant un diamètre qui augmente et des dimensions et un angle de conicité qui sont adaptés aux dimensions et à l'angle de conicité du segment conique intérieur (13).

2. Dispositif de vissage pour conduites selon la revendication 1, **caractérisé en ce que** le segment conique intérieur (13) et le segment conique extérieur (11) sont adaptés l'un à l'autre de telle sorte que la bague de retenue (6) peut être décalée sur le segment conique extérieur (11), en cas de montage manuel de l'écrou-raccord (3), jusqu'à un espacement de jeu (x) avant la collerette (7), dans lequel l'espacement de jeu (x) mesure de 0,1 mm à 1,0 mm, de préférence de 0,3 mm à 0,6 mm.

3. Dispositif de vissage pour conduites selon la revendication 1 ou 2, **caractérisé en ce que** l'angle de conicité du segment conique intérieur (13) et du segment conique extérieur (11) par rapport à l'axe longitudinal de tuyau (X-X) est inférieur à 10°et mesure de préférence de 3° à 7°.

4. Dispositif de vissage pour conduites selon l'une quelconque des revendications 1 à 3, **caractérisé en ce que** le manchon fileté (2) présente dans sa surface d'extrémité annulaire, tournée vers la collerette (7), une rainure annulaire (8) pour recevoir une bague d'étanchéité (9).

5. Dispositif de vissage pour conduites selon l'une quelconque des revendications 1 à 4, **caractérisé en ce que** la bague de retenue (6) et la conduite (1) sont composées de matériaux métalliques ayant le même module d'élasticité.

6. Dispositif de vissage pour conduites selon l'une quelconque des revendications 1 à 5, **caractérisé en ce que** la bague de retenue (6) est composée d'un acier de décolletage.

7. Dispositif de vissage pour conduites selon l'une quelconque des revendications 1 à 6, **caractérisé en ce que** la conduite (1) est composée d'un tuyau en acier de précision, en particulier en acier fin non allié selon EN 10305 ou DIN 1630, ou d'un tuyau en acier de précision en acier fin allié selon DIN 17458.

8. Dispositif de vissage pour conduites selon l'une quelconque des revendications 1 à 7, **caractérisé en ce que** le segment conique intérieur (13) et le segment conique extérieur (11) sont adaptés au niveau de leurs dimensions et de leurs angles de conicité de telle sorte que dans la position de montage finale de la bague de retenue (6), dans laquelle celle-ci s'applique par son extrémité tournée vers la collerette (7) contre celle-ci, il existe un assemblage par adhérence entre la bague de retenue (6) et la conduite (1).
